**Europäisches Patentamt**

**European Patent Office**

**Office européen des brevets**

(11) Veröffentlichungsnummer : **0 395 962 B1**

# (12) EUROPÄISCHE PATENTSCHRIFT

(45) Veröffentlichungstag der Patentschrift :
**18.08.93 Patentblatt 93/33**

(51) Int. Cl.$^5$ : **A23C 15/14, C11B 3/14**

(21) Anmeldenummer : **90107570.5**

(22) Anmeldetag : **20.04.90**

(54) **Verfahren zur Herstellung von cholesterin-reduziertem Butterfett bzw. Butter, Butter (fett), sowie Anlage zu deren Herstellung.**

(30) Priorität : **20.04.89 EP 89107138**

(43) Veröffentlichungstag der Anmeldung :
**07.11.90 Patentblatt 90/45**

(45) Bekanntmachung des Hinweises auf die Patenterteilung :
**18.08.93 Patentblatt 93/33**

(84) Benannte Vertragsstaaten :
**AT BE CH DE DK ES FR GB GR IT LI LU NL SE**

(56) Entgegenhaltungen :
**WO-A-88/02989**
**CA-A- 873 859**

(56) Entgegenhaltungen :
**DE-A- 2 913 734**
**FR-A- 2 413 038**
**US-A- 2 621 196**
**US-A- 2 759 883**
**US-A- 3 506 696**

(73) Patentinhaber : **Hoche, Hermann**
**D-91233 Neunkirchen (DE)**

(72) Erfinder : **Hoche, Hermann**
**D-91233 Neunkirchen (DE)**

(74) Vertreter : **Hansen, Bernd, Dr.rer.nat. et al**
**Hoffmann, Eitle & Partner, Patentanwälte,**
**Postfach 81 04 20**
**D-81904 München (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patent-übereinkommen).

**Beschreibung**

Die Erfindung betrifft ein Verfahren zur Herstellung von cholesterin-reduziertem Butterfett bzw. Butter. Die Erfindung bezieht sich auch auf die Verwendung einer Anlage zur Reduzierung des Cholesteringehaltes in Fetten.

Butterfette und Butter sind wertvolle Materialien, die aus dem Nahrungsbedarf nicht mehr wegzudenken sind. Butter wird üblicherweise aus Milch, Sahne (Rahm) oder Molkensahne (Molkenrahm), auch unter Verwendung von Wasser und Speisesalz, als plastisches Gemisch gewonnen.

Es sind verschiedene Buttersorten bekannt, beispielsweise Sauerrahmbutter, Süssrahmbutter oder mild gesäuerte Butter, in Abhängigkeit von den Ausgangsprodukten und Verarbeitungsbedingungen. Abgesehen hiervon stellt Butter kein in seiner chemischen Zusammensetzung eindeutig festgelegtes Produkt dar, da die Zusammensetzung, Konsistenz und Farbe in Abhängigkeit von der Ernährung und den Haltungsbedingungen der Kühe schwanken können.

Butterfett wird üblicherweise aus Butter gewonnen, der Wasser und Milchbestandteile entzogen werden. Dadurch wird eine grössere Haltbarkeit des Nahrungsmittels erzielt, das sich hierdurch hervorragend für den industriellen Gebrauch bei der Nahrungsmittelproduktion eignet, z.B. bei der Herstellung von Speiseeis, Biskuitprodukten etc.. Butterfett kann jedoch auch direkt als solches verzehrt werden.

Der hohe ernährungsphysiologische Wert wie auch die beliebte geschmackliche Wirkung von Butter bzw. Butterfett stehen ausser Zweifel. Es ist aber auch bekannt, dass die moderne Ernährungsweise in Kombination mit vielfach bewegungsarmen beruflichen Tätigkeiten des Menschen zu gesundheitlichen Schwierigkeiten führen können. Dabei ruht das Augenmerk auch auf dem Anteil von Cholesterin in Nahrungsmitteln.

Durch falsche Ernährung, aber auch durch bestimmte Enzymdefekte können pathologisch erhöhte Cholesterinspiegel im Serum entstehen. Diese werden für die Entstehung von Arteriosklerose einschliesslich der begleitenden Herz- und Kreislaufproblematik für mitverantwortlich gehalten. Die Meinungen über die Zusammenhänge zwischen der Aufnahme cholesterinhaltiger Nahrung und Hypercholesterinämien sind jedoch geteilt. Bekannt ist, dass der Cholesterinwert durch die Aufnahme von Nahrungsmitteln beeinflusst wird, aber auch durch psychische Belastungen, Zuführung von Alkohol etc.. Nach einzelnen Arbeiten sollen Öle mit einem hohen Gehalt an ungesättigten Fettsäuren befähigt sein, den Blutcholeringehalt zu senken und in vielen Fällen gegen Arteriosklerose zu wirken. Tatsache ist aber, dass diese ungesättigten Fettsäuren bzw. Nahrungsmittelprodukte, die diese in beträchtlichem Anteil enthalten, in ihrem Geschmack, aber auch im Hinblick auf den Anteil an wertvollen Nahrungsbestandteilen, dem Naturprodukt Butter bzw. hieraus gewonnenem Butterfett nicht gleichkommen.

WO-A-88/02989 beschreibt ein Verfahren zur Behandlung von Fetten und Ölen, insbesondere von Fischölen, zur Desodorierung und gleichzeitigen Erniedrigung des Cholesteringehaltes. In einer ersten Verfahrensstufe wird dem zu behandelnden Öl Wasserdampf unter Vakuum bei einer Temperatur von ca. 204 bis 288°C zugeführt. Anschließend erfolgt eine Schnellverdampfung. In einem weiteren Verfahrensschritt wird die Reaktionsmischung einem Fallfilmverdampfer zugeführt, wobei das Öl in dem senkrecht angeordneten Fallfilmverdampfer von oben nach unten geleitet wird, während im Gegenstrom dazu Wasserdampf nach oben geleitet wird. Durch dieses Verfahren wird allerdings eine große Menge Dampf verbraucht und es findet ein nicht kleiner Verlust an Fett statt.

CA-A-873 859 beschreibt eine Desodorieranlage für pflanzliche Öle, wobei dort Margarineprodukte angesprochen sind. Die Anlage unterteilt sich in drei verschiedene Bereiche, wobei der erste Bereich Mittel zum Erwärmen des Öls auf ca. 148°C aufweist. In dem zweiten Bereich erfolgt eine Temperatursteigerung auf etwa 232 bis 271°C. Der dritte Bereich enthält Kühlmittel zum Abkühlen des erwärmten Öls. Eine Cholesterinreduzierung von Butter bzw. Butterfett wird jedoch nicht beschrieben.

Der Erfindung liegt die Aufgabe zugrunde, ein Verfahren zur Herstellung von natürlicher Butter bzw. Butterfett anzugeben, die bzw. das ein in seiner natürlichen Zusammensetzung der Fettkomponenten unverändertes, an unerwünschten Begleitstoffen reduziertes Produkt darstellt. Insbesondere soll dies ohne Anwendung chemischer Zusätze erfolgen, und die oben angegebenen Nachteile des Standes der Technik sollen vermieden werden.

Unerwünschte Begleitstoffe in der Butter bzw. im Butterfett können vornehmlich Cholesterin, aber auch Ranziditätskomponenten bzw. ein erhöhtes Maß an freien Fettsäuren sowie erhöhte Peroxidwerte darstellen. Unerwünscht sind weiterhin Pestizide, die über die Nahrung der milcherzeugenden Tiere in die Butter bzw. das Butterfett gelangen können.

Diese Aufgabe wird durch ein Verfahren zur Herstellung von cholesterin-reduziertem Butterfett bzw. Butter über Wasserdampfbehandlung gelöst, das dadurch gekennzeichnet ist, daß man das Fett in einem oder mehreren horizontal oder leicht geneigt angeordneten Reaktionsrohren bei einer Temperatur von 195 bis 250°C und bei einem Druck von 0,5 bis 5 mbar mit Wasserdampf behandelt, den man aus einem oder mehreren, parallel zueinander angeordneten Dampfrohren, die sich über die gesamte Länge des Reaktionsrohres in Rohrachsenrichtung durch die das flüssige Fett (Öl) führende Schicht erstrecken und mit Bohrungen in der Rohrwandung als Austrittsöffnungen für den Wasserdampf versehen sind, in den in Reaktionsrohrachsenrichtung fließenden Ölstrom einspritzt, die Brüden abtrennt und das Fett abkühlt, dem gegebenenfalls Fettrekombinationsstoffe zugeführt werden.

Die Anzahl und Größe der Austrittsöffnungen in den Dampfrohrwänden, aus denen der Wasserdampf in das flüssige Fett eingespritzt wird, richtet sich nach dem Druck in den Dampfrohren, der Höhe und der Temperatur der Ölschicht sowie dem Druck in dem Reaktionsrohr.

Die Position der Bohrungen in den Dampfrohren wird in dem erfindungsgemäßen Verfahren so gewählt, daß eine optimale Dampfverteilung und -durchmischung im Ölbett erfolgt. Vorzugsweise ordnet man die Bohrungen jeweils in einer Dampfrohrquerschnittebene so an, daß die Verbindungslinien zwischen Dampfrohrmittelpunkt und Austrittsöffnung jeweils untereinander einen Winkel von 120°C bilden und eine dieser Verbindungslinien senkrecht zur Dampfrohrachse in Richtung zum Reaktionsrohrboden mit der Ölschicht zeigt.

Mit der obigen Einspritzmethode kann erreicht werden, daß die austretenden, fein verteilten Dampfbläschen das in Richtung der Reaktionsrohrachse fließende Öl in vertikaler Richtung durchströmen, womit ein idealer Kreuzstrom gebildet wird.

In einer besonders vorteilhaften Ausführungsform des Verfahrens stellt man die Schichthöhe des axial fließenden Öls in dem Reaktionsrohr derart ein, daß sie 15 bis 35% des Durchmessers des Reaktionsrohres beträgt.

Weiterhin ist es günstig, wenn man bei dem erfindungsgemäßen Verfahren die Dampfrohre so in der Ölschicht einsetzt, daß der Teil der Ölschicht, der über den Rohren steht, 85 bis 70% der Höhe der Ölschicht ausmacht.

Das erfindungsgemäße Verfahren wird vorzugsweise im Bereich von 200 bis 245°C und insbesondere bevorzugt bei 205 bis 235 bzw. 240°C im Vakuum durchgeführt.

Das Butterfett kann direkt auf die Reaktionstemperatur gebracht werden, wobei es sich jedoch aus Gründen einer schonenden Behandlung des Fettes als günstig erwiesen hat, dies stufenweise vorzunehmen. Vorzugsweise kann dies mittels Wärmetauschern erfolgen.

Das Vakuum beträgt üblicherweise 0,5 bis 5 mbar und vorzugsweise 1 bis 4 mbar, wobei Drucke von 1 bis 3 mbar sich als besonders günstig erwiesen haben.

Bei der Temperaturbehandlung wird Schlepp- oder Trägermaterial bzw. -dampf eingesetzt. Im Rahmen des erfindungsgemässen Verfahrens hat sich hierfür Wasser (Dampf) als besonders geeignet erwiesen, da es sich gegenüber dem Fett unter den Reaktionsbedingungen als verhältnismässig reaktionsträge erwiesen hat und natürlich leicht kondensierbar ist. Überraschend ist in besonderer Weise, dass, obwohl sich die geschmackliche Komposition des Butterfettes bzw. hieraus gewinnbarer Butter nicht oder nicht in erheblichem Masse durch die Hitzebehandlung unter Wasserzuführung bei den Prozesstemperaturen verändert, es zu einer sehr erheblichen Abtrennung an Cholesterin kommt. Offenbar können bei den angewandten Bedingungen auch eine befürchtete Umesterung und damit eine Veränderung und der Abtrieb der die Butterkomposition abrundenden Geschmacks- und Geruchskomponenten weitestgehend vermieden werden.

Der Anteil an während der Temperaturbehandlung zugeführtem Wasser kann variiert werden und beträgt vorteilhaft 0,5 bis 2,5 Gew.% Wasser, bezogen auf das Gewicht des zugeführten Ausgangsfettes. Besonders günstige Werte des zugeführten Wassers liegen im Bereich von 0,8 bis 2 Gew.% Wasser bzw. 1 bis 1,8 Gew.% dieses Schleppmittels.

Vorzugsweise wird das Verfahren in einem Temperaturbereich von 200 bis 245°C bei einem Druck von 1 bis 3 mbar unter stetiger Zuführung von 1 bis 2 Gew.% Wasser durchgeführt.

Je nach Art der gewählten Prozessbedingungen im Rahmen des erfindungsgemässen Verfahrens kann die Reaktion unterschiedlichen Zeitaufwand beanspruchen. Als vorteilhaft haben sich Behandlungszeiten von 30 Minuten bis zu einigen Stunden erwiesen, wobei 1,5 bis 3,5 Stunden besonders zweckmäßig sind.

Die Brüden oberhalb des Ölspiegels können bei dem erfindungsgemäßen Verfahren vorteilhaft durch ein horizontales, sich über die Länge der Ölschicht erstreckendes, an der oberen Tangente mit Öffnungen versehenes Abzugsrohr, das im oberen Bereich des Reaktionsrohres oberhalb der Ölschicht angebracht ist, rasch und gleichmäßig abgezogen werden. Das Abzugsrohr kann mit einem Wehrblech abgeschirmt werden, um zu erreichen, daß mit dem Gasstrom mitgerissene Öltröpfchen zurückgehalten werden, die dann über ein Drainagerohr in die Zuführung des Fettes geleitet werden können.

Bei dem erfindungsgemäßen Verfahren werden die Brüdendämpfe kontinuierlich oder chargenweise aus dem Brüdenraum abgezogen. Diese enthalten Cholesterin, freie Fettsäuren und gegebenenfalls Tocopherole. Diese können aus dem Brüdenkondensat zurückgewonnen werden. Dabei ist es möglich, nach erfolgter Abtrennung zumindest teilweise freie Fettsäure sowie gegebenenfalls Tocopherole dem Endprodukt des Verfahrens, soweit dies gewünscht ist, wieder zuzuführen.

Das gereinigte Fett wird vorzugswese bei einer Temperatur von 40 bis 45°C aus dem Reaktionsrohr entnommen, um eine Peroxidbildung zu verhindern.

Durch das erfindungsgemässe Verfahren ist es in überraschender Weise möglich, den Cholesterinanteil der zugeführten Butterprodukte, üblicherweise Butterfett, sehr erheblich zu reduzieren. Üblicherweise wird eine Reduzierung des Cholesterin-Ausgangswertes von mindestens 70 % im Rahmen des erfindungsgemässen Verfahrens erzielt. Durch die Anwendung der im Rahmen des erfindungsgemässen Verfahrens besonders günstigen Bedingungen ist es jedoch möglich, zum Teil auch bei etwas höherer Reaktionsdauer, noch stärkere Reduktionen des Cholesterin-Ausgangswertes zu erreichen, z.B. auf vorteilhaft 80 bzw. 90 Gew.% bzw. noch geringer.

Dazu ist von Interesse, dass im Körper des Erwachsenen ca. 1 bis 2 g Cholesterin täglich synthetisiert und bei fettarmer Kost 0,04 bis 0,1 g, bei fettreicher Kost bis zu 1,4 g Cholesterin täglich aufgenommen werden können. Nach Römpp "Chemielexikon", 8. Auflage, Band 1, Seite 734 enthalten Nahrungsmittel je 100 g: Butter 244 mg, Margarine 186 mg, Rindfleisch 90 mg etc..

Durch das erfindungsgemäße Verfahren ist es möglich, die Cholesterin-Ausgangswerte von Butter(fett) im Bereich von 0,2 bis 0,4 g/100 g auf 0,01 bis 0,1 Gew.% zu senken. In vorteilhafter Weise wird es durch das erfindungsgemäße Verfahren jedoch möglich, Cholesterinwerte im Bereich von 0,01 bis 0,08, insbesondere bevorzugt bis zu 0,06 Gew.%, zu erreichen. Dabei kann weiterhin der Gehalt an freier Fettsäure auf sehr niedrige Werte bzw. nahe Null eingestellt werden. Das Butterfett, das der Temperaturbehandlung zugeführt wird, weist im allgemeinen einen Gehalt an freier Fettsäure von 0,2 bis 1 Gew.% auf. Dieser Gehalt kann auf weniger als 0,1 Gew.% gesenkt werden. Schließlich kann erreicht werden, daß der Gehalt an Pestiziden, wie Lindan, Aldrin, Thiodan, Dieldrin, Methoxychlor und DDT sowie Metaboliten, auf einen Wert nahezu unterhalb der Nachweisgrenze sinkt.

Neben einem Butterprodukt, das hinsichtlich seines Gehaltes an Cholesterin und an unerwünschten Nebenstoffen in bisher nicht bekanntem Maße reduziert ist, kann das erfindungsgemäße Verfahen auch bewirken, daß der im Laufe des Verfahrens auftretende Verlust an eingesetzter Butter bzw. Butterfett sehr gering ausfällt (1,0 bis 1,5 Gew.%), und daß die notwendige Dampfmenge sehr niedrig gehalten werden kann. Das Verfahren weist damit auch in wirtschaftlicher Hinsicht überraschende Vorteile auf.

Soweit es im Rahmen der Erfindung gewünscht ist, kann das cholesterin-reduzierte Fett, z.B. Butterfett, durch die Zufügung von Butterrekombinationsstoffen in Butter zurückgeführt werden, die in ihren natürlichen Fettbestandteilen und auch ihrem Geschmack von Butter kaum bzw. nicht unterscheidbar ist, jedoch einen sehr erheblich niedrigeren Cholesteringehalt aufweist bzw. hiervon frei ist. Als solche Butterrekombinationsstoffe dienen zweckmässig solche, die bei der Gewinnung von Butterfett aus Butter abgetrennt werden. Bei diesen handelt es sich üblicherweise um Wasser und Milchbestandteile, wie Eiweißstoffe, Milchzucker usw.. Bei der erfindungsgemässen Herstellung von Butter können dem cholesterin-reduzierten Butterfett deshalb zweckmässig Wasser, Eiweiß(bestandteile bzw. -stoffe) sowie gegebenenfalls natürliche oder naturidentische Geruchs-, Geschmacks- bzw. Konservierungskomponenten zugefügt werden, wie sie für Butter typisch sind. Als solche können vorteilhaft Tocopherole, Carotinoide oder Salz Anwendung finden. Gegebenenfalls können auch lebensmittelrechtlich zugelassene Antioxidanzien, wie Zitronensäure, zugesetzt werden. Eine Zufügung solcher Komponenten, auch von naturidentischen Aromastoffen, kann auch deshalb zweckmässig sein, weil bei der Durchführung des erfindungsgemässen Verfahrens zur Cholesterin-Reduzierung eine (Teil)Abtrennung von leicht flüchtigen Geruchs- bzw. Geschmacks- oder Konservierungskomponenten, wie der Tocopherole, miterfolgen kann.

Im Rahmen der Erfindung ist auch die Verwendung einer Anlage zur Reduzierung des Gehaltes an Cholesterin von Butter(fett), die Wärmetauscher zur Aufheizung des Fettes auf Reaktionstemperatur, mindestens ein horizontal oder leicht geneigt angeordnetes Reaktionsrohr mit Zuführungen zur Eindosierung von Wasserdampf über im Reaktionsrohr parallel zur Rohrachsenrichtung verlaufende Dampfrohre mit Austrittsöffnungen für den Wasserdampf in der Rohrwandung, Abzugsleitungen für Brüden, eine Kondensationsapparatur für Brüden, Abzugsleitungen für das gereinigte Fett, Kühlvorrichtungen hierfür, sowie Vorratsbehälter für cholesterinarmes Fett bzw. Zuschlagsstoffe, sowie gegebenenfalls Mischtanks für cholesterinfreies bzw. -armes Fett und Rekombinationsstoffe umfaßt, zur Reduzierung des Cholesteringehaltes von Butterfett oder Butter beansprucht.

Diese Anlage eignet sich auch zur Entfernung unerwünschter Begleitstoffe, wie z.B. Pestizide. Diese cholesterinarmen bzw. -freien Produkte eignen sich zur Herstellung von Lebens- und Genussmitteln in bekannter Weise, insbesondere aber von diätetischen Produkten.

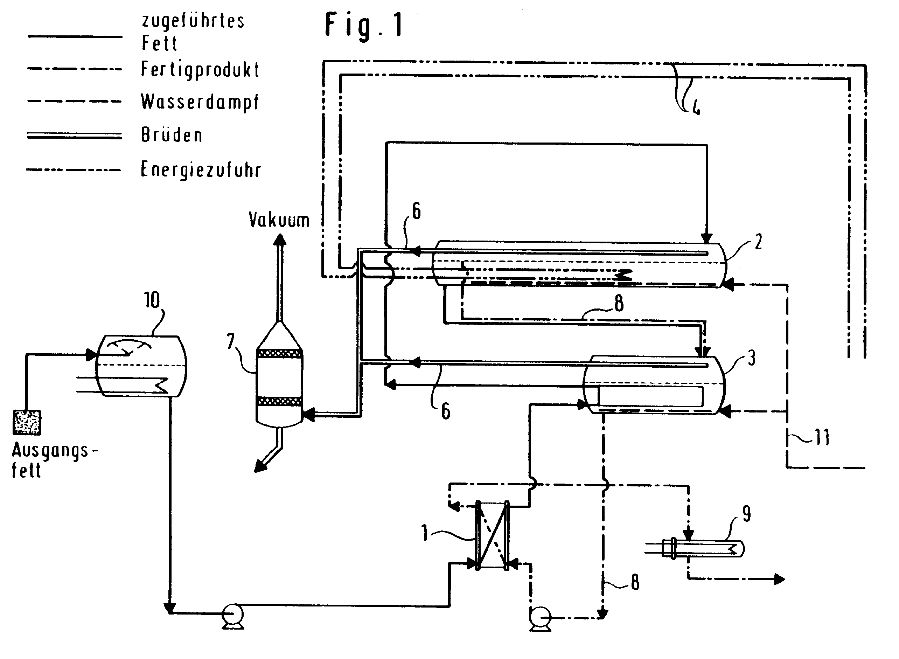

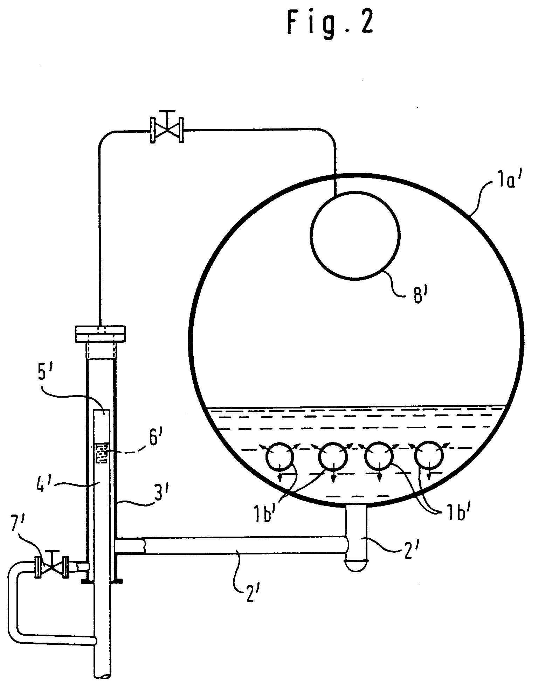

Die Erfindung wird in den Fig. 1 und 2 und dem folgenden Beispiel weiter erläutert. Die Figur 1 zeigt eine Anlage zur Behandlung von Butter bzw. Butterfett, die Figur 2 stellt eine Ausführungsform des in der Anlage beinhalteten Reaktionsrohres dar.

Gemäß Fig. 1 durchläuft das in seinem Gehalt an Cholesterin zu reduzierende Ausgangsprodukt einen Ent-

EP 0 395 962 B1

gaser (10) und tritt in den Wärmetauscher (1) und sodann in ein erstes Reaktionsrohr (3) unter weiterem Wärmeaustausch ein. Es wird über Rohrleitungen in das nachfolgende Reaktionsrohr (2) und hiernach weiter in das Reaktionsrohr (3), in die stetig Wasserdampf eindosiert wird, zur Wärmebehandlung im Vakuum geführt. Die erforderliche Wärmezufuhr kann über die Zuführungen (4) mittels Hochdruckdampf, elektrischer Energie, Wärmeträgeröle etc. erfolgen. Der Wasserdampf wird über die Zuführungen (11) in die Reaktionsrohre (2, 3) stetig zudosiert. Die Brüden werden über die Abzugsleitungen (6) in eine Kondensationsapparatur (7) geleitet, aus dem die abgeführten Fettsubstanzen bzw. Wasser im Kopf bzw. Sumpf niedergeschlagen bzw. abgetrennt werden. Das aus dem Reaktionsrohr (2, 3) austretende cholesterin-reduzierte Fettprodukt durchläuft über die Abzugsleitungen (8) den Wärmeaustauscher (1) unter Abkühlung, sowie die Kühlvorrichtung (9). Nicht in der Anlage gezeigt sind die Vorratsbehälter für cholesterinarmes bzw. -freies Fett bzw. für Rekombinationsstoffe, sowie Mischtanks, in dem das cholesterin-reduzierte Fettprodukt mit Rekombinationsstoffen umgesetzt werden kann.

Fig. 2 behandelt eine spezielle Variante des in der obigen Anlage verwendeten Reaktionsrohres. In dem Reaktionsrohr (1a') verlaufen parallel zur Achsenrichtung Dampfrohre (1b') mit Austrittsöffnungen in der Rohrwand für den Wasserdampf. Ein Auslauf (2') ist mit einer als Doppelrohr ausgebildeten senkrechten Vorrichtung verbunden und mündet in das äußere Mantelrohr (3'). In diesem steigt die Flüssigkeit auf die Überlaufhöhe des inneren Auslaufrohres (4'), das gleichzeitig die Niveauhöhe der Ölschicht im Reaktionsrohr bestimmt. Durch auswechselbare Endstücke (5') an diesem Rohr lädt sich das Niveau regulieren. Diese Vorrichtung kann auch durch ein Gewindegestänge (6') über eine Halterung oder eine automatische Vorrichtung bedient werden. Die Restentleerung erfolgt über ein mit dem Mantel verbundenes Ventil (7'). Das Reaktionsrohr ist weiterhin mit einem Brüdenabzugsrohr (8') ausgestattet. Nicht eingezeichnet sind Wehrbleche innerhalb des Reaktionsrohres, die dieses unterteilen und gleichzeitig zur Aufnahme und Halterung von Heiz- und Einspritzdampfrohren dienen und lose gegen Unterstützungen an der inneren Reaktionsrohrwand aufgelagert sind.

Die Erfindung wird nachstehend anhand einer bevorzugten Ausführungsform weiter erläutert.

BEISPIEL

In die in der Figur 1 gezeigte Anlage mit dem Reaktionsrohr gemäß Fig. 2 wird Butterfett mit den folgenden Kenndaten eingeführt:

| | |
|---|---|
| Gehalt an freier Fettsäure: | 0,8 Gew.% |
| Feuchtigkeit | 0,1 Gew.% |
| Cholesterin | 0,3 Gew.% |
| Peroxidzahl | 0,5 |

Das Butterfett wird nach Durchleitung durch den Entgaser bei einer Temperatur im Bereich von 80 bis 90°C im ersten Wärmetauscher auf 145°C erhitzt. Im nachfolgenden Reaktionsrohr wird die Temperatur des Fettproduktes auf 190°C durch Wärmeaustauscher erhöht, wonach das Produkt zur Wärmebehandlung in die Reaktionsrohre eingeführt wird.

Das Produkt wird hierin bei 230 bzw. 190°C und jeweils 1,5 mbar behandelt, wobei insgesamt 13 kg Wasserdampf/t Fettprodukt zugeführt werden. Die Reaktionszeit beträgt ca. 2 Stunden. Das bei der Wärmebehandlung in den Reaktionsrohren bei den Temperaturen von 230 und 190°C abziehbare Brüdenprodukt wird laufend abgeführt und über das Kondensationsgefäss aufgetrennt. Das hitzebehandelte Produkt wird über den Wärmetauscher sowie die nachfolgende Kühlvorrichtung abgekühlt und in einen Lagertank überführt.

Das derart behandelte Butterfett wies folgende Kennwerte auf:

| | | |
|---|---|---|
| Gehalt an freier Fettsäure | max. | 0,05 Gew.% |
| Feuchtigkeit | | 0 |
| Cholesterin | weniger als | 0,08 Gew.% |
| Peroxidzahl | | 0 |

**Patentansprüche**

1. Verfahren zur Herstellung von cholesterin-reduziertem Butterfett bzw. Butter über Wasserdampfbehandlung,
   dadurch **gekennzeichnet**, daß

man das Fett in einem oder mehreren horizontal oder leicht geneigt angeordneten Reaktionsrohren bei einer Temperatur von 195 - 250°C und bei einem Druck von 0,5 - 5 mbar mit Wasserdampf behandelt, den man aus einem oder mehreren, parallel zueinander angeordneten Dampfrohren, die sich über die gesamte Länge des Reaktionsrohres in Rohrachsenrichtung durch die das flüssige Fett (Öl) führende Schicht erstrecken und mit Bohrungen in der Rohrwandung als Austrittsöffnungen für den Wasserdampf versehen sind, in den in Reaktionsrohrachsenrichtung fließenden Ölstrom einspritzt, die Brüden abtrennt und das Fett abkühlt, dem gegebenenfalls Fettrekombinationsstoffe zugeführt werden.

2. Verfahren nach Anspruch 1,
dadurch **gekennzeichnet**, daß
man die Schichthöhe des in Richtung der Reaktionsrohrachse fließenden Öls in dem Reaktionsrohr derart einstellt, daß sie 15 bis 35% des Durchmessers des Reaktionsrohres beträgt.

3. Verfahren nach Anspruch 1 und 2,
dadurch **gekennzeichnet**, daß
man die Dampfrohre so in die Ölschicht einsetzt, daß der Teil der Ölschicht, der über den Rohren steht, 85 bis 70% der Höhe der Schicht ausmacht.

4. Verfahren nach einem oder mehreren der vorhergehenden Ansprüche,
dadurch **gekennzeichnet**, dass 0,5 bis 2,5 Gew.% Wasser, bezogen auf das Gewicht des zugeführten (Butter)Fettes, im Verlauf der Temperaturbehandlung zudosiert werden.

5. Verfahren nach einem oder mehreren der vorhergehenden Ansprüche, dadurch **gekennzeichnet,**
dass das Verfahren im Bereich von 200 bis 245°C bei einem Druck von 1 bis 3 mbar unter stetiger Zuführung von 1 bis 2 Gew.% Wasser durchgeführt wird.

6. Verfahren nach einem oder mehreren der vorhergehenden Ansprüche,
dadurch **gekennzeichnet**, daß
das Fett stufenweise auf die Reaktionstemperatur, vorzugsweise mittels Wärmetauscher, gebracht wird.

7. Verfahren nach einem oder mehreren der vorhergehenden Ansprüche, dadurch **gekennzeichnet**,
dass die Verweilzeit des Fettes im Reaktionsrohr 1,5 bis 3,5 Stunden beträgt.

8. Verfahren nach Anspruch 1, dadurch **gekennzeichnet**, dass die Brüdendämpfe kondensiert und aus dem Kondensat freie Fettsäuren und Cholesterin gewonnen werden.

9. Verfahren nach Anspruch 1, dadurch **gekennzeichnet**, dass als Butterrekombinationsstoffe Wasser, Milchbestandteile, sowie gegebenenfalls Tocopherol, Carotinoide oder Salz zugeführt werden.

10. Verfahren nach einem oder mehreren der vorhergehenden Ansprüche, dadurch **gekennzeichnet**, daß ein Butterfett mit einem Gehalt an freier Fettsäure von 0,2 bis 1 Gew.% und einem Cholesteringehalt von 0,2 bis 0,4 Gew.% der Temperaturbehandlung zugeführt wird.

11. Verwendung einer Anlage, die Wärmeaustauscher zur Aufheizung des Fettes auf Reaktionstemperatur, mindestens ein horizontal oder leicht geneigt angeordnetes Reaktionsrohr mit Zuführungen zur Eindosierung von Wasserdampf über im Reaktionsrohr parallel zu dessen Achse verlaufende Dampfrohre mit Austrittsöffnungen in der Rohrwand für den Wasserdampf, Abzugsleitungen für Brüden, eine Kondensationsapparatur für Brüden, Abzugsleitungen für das gereinigte Fett, Kühlvorrichtungen hierfür, sowie Vorratsbehälter für cholesterinarmes Fett bzw. Zuschlagsstoffe, sowie gegebenenfalls Mischtanks für cholesterinfreies bzw. -armes Fett und Rekombinationsstoffe umfaßt, zur Reduzierung des Cholesteringehaltes von Butterfett oder Butter.

## Claims

1. Method for the preparation of reduced-cholesterol butterfat or butter by steam treatment, characterised in that the fat is treated in one or more horizontal or slightly inclined reaction pipes at a temperature of 195-250°C and at a pressure of 0.5-5 mbar with steam which is injected from one or more steam pipes arranged parallel to each other, which extend over the whole length of the reaction pipe in the axial direction of the pipe through the layer conducting the liquid fat (oil) and are provided with bores in the pipe wall as outlet openings for the steam, into the oil stream flowing in the axial direction of the reaction pipe, the vapours are separated and the fat is cooled and, if occasion arises, fat recombination substances are supplied to it.

2. Method according to claim 1, characterised in that the height of the layer of oil flowing in the direction of the reaction pipe axis in the reaction pipe is adjusted in such a way that it is 15 to 35% of the diameter of the reaction pipe.

3. Method according to claims 1 and 2, characterised in that the steam pipes are inserted in the oil layer in such a way that the portion of the oil layer which stands above the pipes is 85 to 70% of the height of the layer.

4. Method according to one or more of the preceding claims, characterised in that 0.5 to 2.5 wt.% water, referred to the weight of the (butter)fat supplied, is added in the course of temperature treatment.

5. Method according to one or more of the preceding claims, characterised in that the method is carried out within a range from 200 to 245°C at a pressure from 1 to 3 mbar with a constant supply of 1 to 2 wt.% water.

6. Method according to one or more of the preceding claims, characterised in that the fat is brought to the reaction temperature in stages, preferably by means of heat exchangers.

7. Method according to one or more of the preceding claims, characterised in that the residence time of the fat in the reaction pipe is 1.5 to 3.5 hours.

8. Method according to claim 1, characterised in that the vapours are condensed, and free fatty acids and cholesterol are obtained from the condensate.

9. Method according to claim 1, characterised in that water, milk constituents, as well as, if occasion arises, tocopherol, carotenoids or salt are supplied as butter recombination substances.

10. Method according to one or more of the preceding claims, characterised in that a butterfat with a free fatty acid content from 0.2 to 1 wt.% and a cholesterol content from 0.2 to 0.4 wt.% are supplied for temperature treatment.

11. Use of an apparatus which includes heat exchangers for heating the fat to reaction temperature, at least one horizontal or slightly inclined reaction pipe with supply means for the measured addition of steam via steam pipes extending in the reaction pipe parallel to the axis thereof, with outlet openings for the steam in the pipe wall, discharge pipes for vapours, a condensation apparatus for vapours, discharge pipes for the purified fat, cooling devices therefor, as well as storage tanks for low-cholesterol fat or additives, as well as, if occasion arises, mixing tanks for cholesterol-free or low-cholesterol fat and recombination substances, for reducing the cholesterol content of butterfat or butter.

## Revendications

1. Procédé de préparation de graisse de beurre ou de beurre à teneur réduite en cholestérol, par l'intermédiaire d'un traitement à la vapeur d'eau, caractérisé en ce que l'on traite la graisse dans un ou plusieurs tubes de réaction disposés horizontalement ou légèrement inclinés, à une température de 195 à 250° C et à une pression de 0,5 à 5 mbar avec de la vapeur d'eau que l'in injecte à partir d'un ou plusieurs tubes à vapeur, disposés parallèlement, s'étendant sur toute la longueur ou tube de réaction, dans la direction de l'axe de tube, à travers la couche guidant la graisse (huile) liquide et comportant des perçages dans la paroi tubulaire, pour servir d'ouvertures de sortie de la vapeur d'eau passant dans le courant d'huile s'écoulant dans la direction de l'axe du tube de réaction, on sépare les buées et l'on refroidit la graisse, à laquelle sont le cas échéant amenées des substances de recombinaison de la graisse.

2. Procédé selon la revendication 1, caractérisé en ce que l'on règle la hauteur de couche de l'huile s'écoulant en direction de l'axe du tube de réaction, à l'intérieur de ce dernier, de façon qu'elle fasse de 15 à 35 % du diamètre du tube de réaction.

3. Procédé selon les revendications 1 et 2, caractérisé en ce que l'on introduit les tubes de vapeur dans la couche d'huile, de telle façon que la partie de la couche d'huile située au-dessus des tubes fasse de 85 à 70 % de la hauteur de la couche.

4. Procédé selon l'une ou plusieurs des revendications précédentes, caractérisé en ce qu'au cours du traitement thermique, on ajoute par dosage de 0,5 à 2,5 % en poids d'eau, rapporté au poids de la graisse (de beurre) amenée.

5. Procédé selon l'une ou quelconque des revendications précédentes, caractérisé en ce que le procédé est mis en oeuvre à une température située dans la plage allant de 200 à 245° C, avec une pression comprise entre 1 et 3 mbar avec une amenée constante d'eau, suivant une proportion de 1 à 2 % en poids.

6. Procédé selon l'une ou plusieurs des revendications précédentes, caractérisé en ce que l'on amène la graisse par étapes à la température de réaction, de préférence au moyen d'échangeurs de chaleur.

7. Procédé selon l'une ou plusieurs des revendications précédentes, caractérisé en ce que le temps de séjour de la graisse dans le tube de réaction est de 1,5 à 3,5 heures.

8. Procédé selon la revendication 1, caractérisé en ce que les vapeurs des buées sont condensées et des acides gras libres et du cholestérol étant obtenus à partir du condensat.

9. Procédé selon la revendication 1, caractérisé en ce que l'on ajoute, à titre de substances de recombinaison du beurre, de l'eau, des composants laitiers ainsi que, le cas échéant du tocophérol, ce la carotinoïde ou du sel.

10. Procédé selon l'une ou plusieurs des revendications précédentes, caractérisé en ce que l'on amène au traitement thermique une graisse de beurre ayant une teneur en acides gras libre allant de 0,2 à 1 % en poids et une teneur en cholestérol allant de 0,2 à 0,4 % en poids.

11. Utilisation d'une installation, comprenant des échangeurs de chaleurs pour le chauffage de la graisse à la température de réaction, au moins un tube de réaction disposé horizontalement ou légèrement incliné avec des amenées pour un apport dosé de vapeur d'eau, par l'intermédiaire de tubes de vapeur s'étendant dans le tube de réaction, parallèlement à son axe, avec des orifices de sortie ménagés dans la paroi tubulaire, pour la vapeur d'eau des conduites d'extraction pour les buées, un appareil de condensation pour les buées des conduites d'extraction pour la graisse épurée, des dispositifs de refroidissement à cette fin, ainsi qu'un récipient de stockage pour la graisse à faible teneur en cholestérol, respectivement les additifs, ainsi que, le cas échéant, un réservoir de mélange pour la graisse sans cholestérol ou à faible teneur en cholestérol et les substances de recombinaison, en vue de réduire la teneur en cholestérol de graisse de beurre ou de beurre.

# Fig.1

| | zugeführtes Fett |
|---|---|
| | Fertigprodukt |
| | Wasserdampf |
| | Brüden |
| | Energiezufuhr |

Vakuum

Ausgangs-fett

# Fig. 2